Europäisches Patentamt

(19) European Patent Office

Office européen des brevets

(11) **EP 0 550 712 B1**

## (12) FASCICULE DE BREVET EUROPEEN

(45) Date de publication et mention
de la délivrance du brevet:
**03.09.1997 Bulletin 1997/36**

(21) Numéro de dépôt: **92913386.6**

(22) Date de dépôt: **19.06.1992**

(51) Int Cl.$^6$: **H04N 7/00**

(86) Numéro de dépôt international:
**PCT/FR92/00563**

**WO 93/00770 (07.01.1993 Gazette 1993/02)**

(54) **PROCEDE ET DISPOSITIF DE MODULATION ET DE DEMODULATION DE SOUS-CANAUX DE TRANSMISSION POUR SYSTEME DE TELEVISION COMPATIBLE**

Verfahren und Anordnung zur Modulation und Demodulation von Ubertragungssubkanälen für kompatibles Fernsehsystem

METHOD AND DEVICE FOR MODULATING AND DEMODULATING TRANSMISSION SUBCHANNELS FOR A COMPATIBLE TELEVISION SYSTEM

(84) Etats contractants désignés:
**AT CH DE DK FR GB IT LI NL SE**

(30) Priorité: **27.06.1991 FR 9108009**

(43) Date de publication de la demande:
**14.07.1993 Bulletin 1993/28**

(73) Titulaire: **THOMSON multimedia**
**92400 Courbevoie (FR)**

(72) Inventeur: **LE PANNERER, Yves-Marie**
**F-92045 Paris-La Défense Cédex 67 (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
FR-A- 2 638 305          FR-A- 2 643 531
GB-A- 2 189 366          US-A- 4 881 241

- **1990 IEEE International Symposium on Circuits and Systems, New Orleans, LA, 1-3 mai 1990, vol. 1, IEEE, (New York, US), N. FLIEGE: "Polyphase FFT filter bank for QAM data transmission", pages 654-657, voir section 1**
- **Signal Processing Image Communication, vol. 2, no. 3, octobre 1990, Elsevier, (Amsterdam, NL), M. PECOT et al.: "Compatible coding of television images. Part 2. Compatible system", pages 259-268, see page 259, colonne de gauche, ligne 1 - page 260, colonne de gauche, ligne 3; figure 1**
- **IEEE Global Telecommunications Conference & Exhibition, Dallas, Texas, 27-30 novembre 1989, vol. 3, IEEE, (New York, US), D. DUPONTEIL et al.: "The 2nQAM modulations of rate (N-1)/N", pages 1698-1702, voir abrégé; figure 1**

## Description

La présente invention concerne un procédé et un dispositif de modulation et de démodulation de sous-canaux de transmission pour système de télévision compatible.

Les procédés utilisés dans les dispositifs connus de modulation numérique de signaux de télévision tels que ceux décrits par exemple dans les demandes de brevet FR-A-2 638 305 et FR-A-2 638 306 déposés au nom de la Demanderesse consistent à regrouper les éléments binaires du signal à transmettre en paquets chaque paquet transmettant un nombre déterminé de symboles.

Avec de tels dispositif les récepteurs qui sont conçus pour travailler sur des résolutions d'image bien inférieures à celles des images transmises à l'émission voient leur coût de réalisation exagérément élevés du fait que leurs démodulateurs sont conçus pour restituer intégralement les paquets d'éléments binaires qu'ils reçoivent sans tenir compte du niveau de résolution des images restituées par le récepteur. Toutefois pour alléger les coûts de réalisation des récepteurs, des simplifications des décodeurs des récepteurs qui sont couplés en sortie des démodulations, ont déjà été proposées dans des demandes de brevet FR-A-2 643 531 et FR-A-2 654 887 déposées également au nom de la Demanderesse. Ces dispositifs permettent notamment d'utiliser des décodeurs d'autant plus simples et moins coûteux que la résolution des récepteurs est plus faible, ceci même lorsque la résolution de l'image codée par le codeur d'émission est plus grande.

Le but de l'invention est de pallier les inconvénients précités, pour permettre à chaque démodulateur spécifique d'un niveau de résolution d'image donné de n'avoir accès qu'aux informations strictement nécessaires à la démodulation de l'image de ce niveau de résolution.

A cet effet l'invention a pour objet un procédé de modulation et transmission selon les revendications 1 et 4.

L'invention a également pour objet un dispositif pour la mise en oeuvre du procédé de transmission précité selon la revendication 5.

D'autres caractéristiques et avantages de l'invention apparaîtront à l'aide de la description qui suit faite en regard des dessins annexés qui représentent :

La figure 1 un schéma pour illustrer le principe de modulation mise en oeuvre par l'invention.

La figure 2 un arbre de décomposition du spectre spatio-temporel d'une image de télévision haute définition en sous-bandes.

La figure 3 un exemple de regroupement de paquets respectant l'arbre de décomposition de la figure 2.

La figure 4 un mode de réalisation d'un démodulateur compatible selon l'invention.

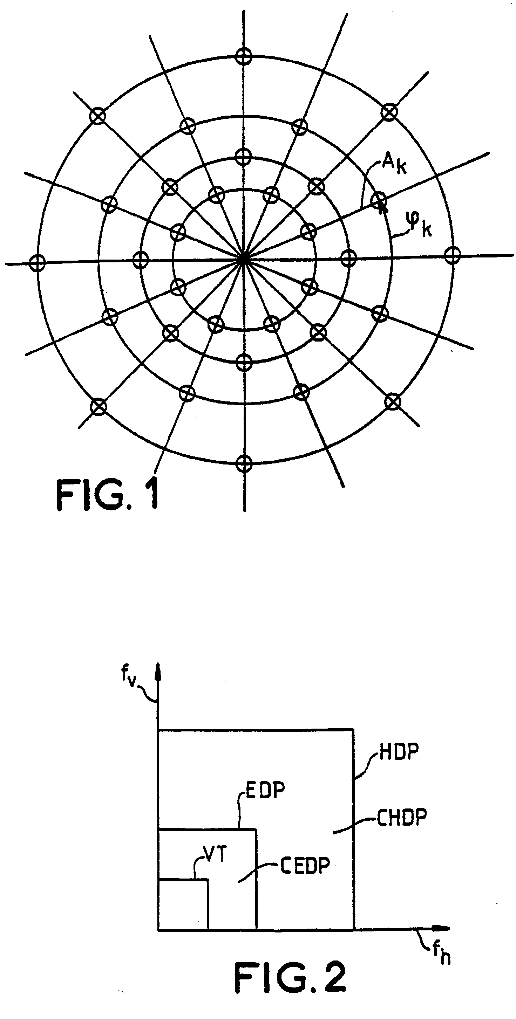

Dans le schéma de modulation représenté à la figure 1 à chaque mot numérique du signal de télévision à transmettre est associé à une amplitude $A_k$ et une phase $\varphi_k$ dans le plan complexe. De la sorte pour des amplitudes $A_k$ constantes les couples amplitude phase ($A_k$, $\varphi_k$) se trouvent être répartis sur des cercles concentriques lorsque la phase $\varphi_k$ varie.

Le procédé de transmission selon l'invention consiste à regrouper les couples ($A_k$, $\varphi_k$) en paquets correspondant chacun a un niveau de résolution d'un récepteur. En fixant à L le nombre de symboles contenus dans un paquet le regroupement dans chaque paquet peut alors s'opérer d'une façon similaire à celle décrite dans la demande de brevet n° 2 638 3206 en effectuant sur les couples ($A_k$, $\varphi_k$) une opération de la forme :

$$\sum_{k=1}^{L} A_k . e^{j \varphi_k} . e^{2\pi j k \frac{t}{T}} \qquad (1)$$

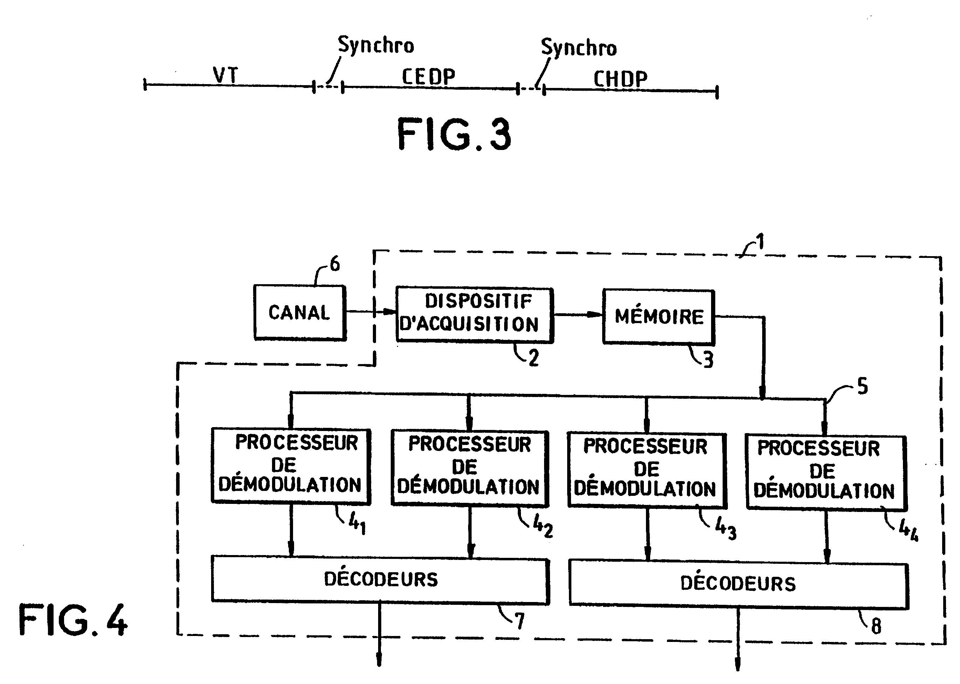

et représentative d'un signal de modulation d'une onde porteuse sinusoïdale de fréquence fo. L'avantage de procéder ainsi est de permettre un décodage immédiat des seuls paquets transmis correspondant à chaque résolution spécifique d'un récepteur. En effet, comme cela est décrit dans les demandes de brevets FR-A-2 643 531 et FR-A-2 654 887 il est possible par des découpages du signal de télévision en sous-bandes d'adapter les décodeurs des récepteurs pour qu'ils ne décodent strictement que les données des sous-bandes correspondant à leur propre résolution. Autrement dit, en prélevant sur un canal de transmission d'images de télévision une partie du débit des informations transmises pour le ramener à un débit inférieur en transportant une image compatible de résolution inférieure, comme c'est le cas par exemple pour une image comportant moitié moins de lignes et de colonnes qu'une image HDTV d'origine, un décodeur adapté à ce niveau de résolution moitié moindre peut décoder et afficher une image compatible avec un coût de réalisation beaucoup plus faible que celui d'un décodeur HDTV complet travaillant sur l'image HDTV entière. Ainsi comme le montre la figure 2, le spectre du signal HDP à 1250 lignes qui est représenté dans un espace de Fourier à deux dimensions comportant en horizontal et en vertical les fréquences spatiales de l'image mesurées en cycles par largeur et hauteur d'image, peut être découpé en sous-bandes correspondant aux standards EDP (625 lignes) et VT (312 lignes) de façon à associer un décodeur correspondant à chacun des spectres HDP-EDP et VT, et à être compatible avec le découpage en paquets décrit précédemment en appliquant à chaque décodeur les paquets de couple $(A_k, \varphi_k)$ correspondant à son niveau de résolution. Il suffit comme le montre le découpage en paquets de la figure 3 d'organiser la suite des paquets en un premier paquet correspondant aux couples $(A_k, \varphi_k)$ de la sous-bande VT puis un deuxième paquet correspondant aux couples $(A_k, \varphi_k)$ de la partie complémentaire du spectre conduisant à partir du spectre VT au spectre EDP et enfin à transmettre dans un troisième paquet correspondant aux couples $(A_k, \varphi_k)$ de la partie complémentaire CHDP au spectre EDP pour former le spectre HDP. Naturellement un intervalle de garde doit être prévu entre chaque paquet pour transmettre les signaux de synchronisation et les signaux d'égalisation de canal. De la sorte en ne démodulant que les informations relatives à ces paquets, un démodulateur peut avoir ainsi accès à toutes les informations de ce sous-canal. Du fait qu'il n'a à démoduler qu'un nombre réduit de paquets, sa complexité est de ce fait réduite.

Un démodulateur correspondant est représenté à la figure 4 à l'intérieur d'une ligne formée en pointillée 1. Il comporte un dispositif d'acquisition de la forme d'onde transmise 2 formé principalement par un convertisseur analogique numérique. Ce dispositif peut être le même qu'il s'agisse d'un démodulateur capable de démoduler le débit total du signal appliqué à son entrée ou seulement un sous-canal. Le démodulateur 1 comporte également une mémoire tampon 3 des échantillons de signal fournis par le dispositif d'acquisition 2, et un ou plusieurs processeurs de démodulation $4_1...4_4$ couplés à la sortie de la mémoire 3 par l'intermédiaire d'un bus de données 5.

La mémoire 3 permet de traiter éventuellement les échantillons acquis du dispositif d'acquisition 2 à un rythme qui peut être plus lent que ne les distribue le dispositif d'acquisition 2 particulièrement lorsque le démodulateur ne démodule qu'une partie des paquets transmis. Les processeurs $4_1...4_4$ effectuent les calculs nécessaires à la démodulation des symboles transmis dans les paquets chaque processeur étant de préférence dédié à un type de paquet spécifique tel que défini précédemment. Ces processeurs sont par exemple des processeurs de traitement de signal programmés pour effectuer des calculs de FFT rapide sur les échantillons lus dans la mémoire 3, FFT désignant ici l'algorithme connu sous la désignation anglo-saxonne "Fast Fourier Transform" dont des descriptions peuvent par exemple être trouvées dans le livre intitulé "Le filtrage numérique" de P.M. BEAUFILS/M.RAMI publié par SYBEX ou encore dans le livre intitulé "Digital communications-fundamentals and applications" de Bernard Sklar publié par Prentice Hall. Naturellement le démodulateur reçoit le signal de télévision modulé sur un canal référencé par 5 sur la figure 1 et redistribue les échantillons traités par les processeurs de démodulation $4_i$ sur des décodeurs compatibles 7 ou complémentaires 8.

## Revendications

1. Procédé de modulation de sous-canaux de transmission pour système de télévision numérique compatible associant à chaque mot numérique du signal de télévision à transmettre une amplitude $A_k$ et une phase $\varphi_K$, caractérisé en ce qu'il consiste à regrouper les couples $(A_k, \varphi_K)$ en paquets adaptés aux niveaux de résolutions des récepteurs pour former un signal modulant à partir des couples contenus dans chaque paquet.

2. Procédé selon la revendication 1, caractérisé en ce que chaque image compatible est portée par au moins un signal modulant.

3. Procédé selon l'une quelconque des revendications 1 et 2, caractérisé en ce que des images compatibles sont des images des standards HDP, EDP et VT.

4. Procédé de transmission de signaux pour système de télévision numérique compatible, signaux transmis par paquets et modulés en amplitude phase, caractérisé en ce que les signaux utiles à transmettre sont préalablement décomposés en signaux de niveaux de résolution différents et en ce que le signal transmis est modulé successivement par ces signaux utiles de telle manière que chaque paquet du signal transmis corresponde à un niveau de résolution.

5. Démodulateur pour la mise en oeuvre du procédé selon la revendication 4, caractérisé en ce qu'il comprend un dispositif d'acquisition (2) pour échantillonner les signaux de modulation obtenus dans chacun des sous-canaux, une mémoire tampon (3) pour mémoriser les échantillons fournis par le dispositif d'acquisition (2) et au moins un processeur de démodulation couplé à la mémoire (3) en nombre proportionnel au nombre de paquets démodulés par seconde, en prenant en compte les seuls paquets nécessaires à la résolution du récepteur associé au démodulateur.

6. Appareil de réception pour la mise en oeuvre du procédé selon la revendication 4, caractérisé en ce qu'il comporte un démodulateur selon la revendication 5.

**Patentansprüche**

1. Verfahren zur Modulation von Übertragungsunterkanälen für ein kompatibles digitales Fernsehsystem, bei dem jedem digitalen Wort des zu übertragenden Fernsehsignals eine Amplitude $A_k$ und eine Phase $\phi_k$ zugeordnet ist, dadurch gekennzeichnet, daß es aus der Umgruppierung der Paare ($A_k$, $\phi_k$) in Pakete besteht, die an die Auflösungshöhen der Empfänger angepaßt sind, um ein von den in jedem Paket enthaltenen Paaren ausgehendes modulierendes Signal zu bilden.

2. Verfahren nach Anspruch 1, dadurch gekennzeichnet, daß jedes kompatible Bild von mindestens einem modulierenden Signal getragen wird.

3. Verfahren nach einem der Ansprüche 1 und 2, dadurch gekennzeichnet, daß die kompatiblen Bilder Bilder des HDP-, EDP- und VT-Standards sind.

4. Übertragungsverfahren von Signalen für ein kompatibles digitales Fernsehsystem, wobei die Signale durch Pakete übertragen und amplituden- und phasen- moduliert sind, dadurch gekennzeichnet, daß die zu übertragenden Nutzsignale vorzugsweise in Signale mit unterschiedlichen Auflösungshöhen zerlegt sind und daß das übertragene Signal nacheinander von diesen Nutzsignalen so moduliert wird, daß jedes Paket des übertragenen Signals einer Auflösungshöhe entspricht.

5. Demodulator zur Anwendung des Verfahrens nach Anspruch 4, dadurch gekennzeichnet, daß er eine Erfassungsvorrichtung (2) zum Abtasten der in jedem der Unterkanäle enthaltenen Modulationssignale, einen Pufferspeicher (3) zum Speichern der von der Erfassungsvorrichtung (2) gelieferten Abtastwerte und mindestens einen an den Speicher (3) angekoppelten Demodulationsprozessor umfaßt, und zwar in einer zur pro Sekunde demodulierten Anzahl von Paketen proportionalen Anzahl und unter Berücksichtigung von nur den für die Auflösung des mit dem Demodulator verbundenen Empfängers notwendigen Paketen.

6. Empfangsgerät zur Anwendung des Verfahrens nach Anspruch 4, dadurch gekennzeichnet, daß es einen Demodulator nach Anspruch 5 umfaßt.

**Claims**

1. Method for modulating transmission sub-channels for a compatible digital television system, associating an amplitude $A_k$ and a phase $\varnothing_K$ with each digital word of the television signal to be transmitted, characterized in that it consists in grouping the pairs ($A_k$, $\varnothing_K$) into packets matched to the levels of resolution of the receivers in order to form a modulating signal from the pairs contained in each packet.

2. Method according to Claim 1, characterized in that each compatible image is carried by at least one modulating signal.

3. Method according to either of Claims 1 and 2, characterized in that compatible images are images of the SHD, SED and VT standards.

4. Method for transmitting signals for a compatible digital television system, signals transmitted in packets and amplitude phase modulated, characterized in that the useful signals to be transmitted are previously decomposed into signals of different levels of resolution and in that the signal transmitted is modulated in succession by these useful signals in such a way that each packet of the signal transmitted corresponds to a resolution level.

5. Demodulator for implementing the method according to Claim 4, characterized in that it comprises an acquisition device (2) for sampling the modulation signals obtained in each of the sub-channels, a buffer memory (3) for storing the samples provided by the acquisition device (2) and at least one demodulation processor coupled to the memory (3) proportional in number to the number of packets demodulated per second, taking into account only the packets necessary for the resolution of the receiver associated with the demodulator.

6. Receiver apparatus for the implementation of the method according to Claim 4, characterized in that it includes a demodulator according to Claim 5.

FIG. 1

FIG. 2

EP 0 550 712 B1

Synchro                Synchro

| VT | | CEDP | | CHDP |

## FIG.3

## FIG.4

CANAL → DISPOSITIF D'ACQUISITION → MÉMOIRE

PROCESSEUR DE DÉMODULATION  PROCESSEUR DE DÉMODULATION  PROCESSEUR DE DÉMODULATION  PROCESSEUR DE DÉMODULATION

DÉCODEURS        DÉCODEURS